# EUROPÄISCHE PATENTANMELDUNG

(11) **EP 2 386 593 A1**
(43) Veröffentlichungstag der Anmeldung: **16.11.2011**
(21) Anmeldenummer: 11162709.7
(22) Anmeldetag: 15.04.2011
(51) Int. Cl.: C08J 3/24, C08J 5/00, C08J 7/12

(54) **Verfahren zur Vernetzung von polymeren Formkörpern mit reaktiven Gasen**

(30) Priorität: 20.04.2010 DE 102010027956
(71) Anmelder: Robert Bosch GmbH, 70442 Stuttgart (DE)
(72) Erfinder: Aichele, Wilfried, 71364 Winnenden (DE)

(57) **Zusammenfassung**

Die vorliegende Erfindung betrifft ein Verfahren zur Herstellung eines polymeren Formkörpers umfassend die Schritte:
a) Bereitstellen eines polymeren und/oder polymerisierbaren Ausgangsmaterials, welches kein Silan modifiziertes Polyolefin ist,
b) Formen eines polymeren Formkörpers aus dem Material des Schritts a) in einem Formgebungsprozess, und
c) gleichzeitiges Tempern und Durchvernetzen des Formkörpers aus Schritt b) bei einer Temperatur unterhalb der Schmelztemperatur des Polymers und unter Zusatz eines Reaktivgases

sowie einen nach diesem Verfahren hergestellten polymeren Formkörper und dessen Verwendung als Kraftstoff beaufschlagtes Bauteil in der Automobiltechnik.

## Beschreibung

### Stand der Technik

Die Vernetzung von polymeren Formkörpern nach ihrer Formgebung ist für thermoplastische Materialien, aber insbesondere für duroplastische Formkörper bekannt. Bei der Herstellung von duroplastischen Formkörpern werden niedrig schmelzende Monomere oder Präpolymere mit einer Funktionalität > 2 bei niedrigen Temperaturen aufgeschmolzen und in ein wesentlich heißeres Werkzeug eingespritzt. Im erhitzten Werkzeug reagieren die funktionellen Gruppen miteinander und der Formkörper härtet teilweise unter Verfestigung aus. Aus wirtschaftlichen Gründen wird das Formteil vor der vollständigen Vernetzung aus dem Werkzeug entformt. Deshalb schließt sich häufig zur Verbesserung der Gebrauchseigenschaften ein Temperprozess, oft in mehreren Temperaturstufen, an. In diesem Schritt reagieren die im Formgebungsprozess noch nicht umgesetzten funktionellen Gruppen miteinander, wodurch sich die Vernetzungsdichte erhöht. Auf dies Weise können für duroplastische Formkörper gebrauchsrelevante Eigenschaften wie Glasübergangstemperatur, Wärmeformbeständigkeit oder die Beständigkeit gegenüber flüssigen Medien sowie die Neigung zur Quellung in flüssigen Medien positiv beeinflusst werden.

Zur Herstellung von Formkörpern aus Thermoplasten wird üblicherweise das aufgeschmolzene polymere Ausgangsmaterial in eine Form eingespritzt, deren Temperatur niedriger gehalten wird als die Schmelztemperatur des Polymers, so dass der Formkörper entweder aus amorph oder teilkristallin erstarrtem Polymer aus dem Werkzeug entformt werden kann. Bereits erstarrte Thermoplaste können durch Erwärmen oberhalb ihrer Schmelztemperatur wieder aufgeschmolzen werden und ein weiterer Formgebungsprozess kann sich anschließen. Diese Eigenschaft wird beispielsweise bei der direkten Angussrückführung beim Spritzguss von Thermoplastbauteilen genutzt. Ebenso wie im Fall der Duroplaste kann eine Vernetzung von Thermoplasten ihre Gebrauchseigenschaften verbessern. Eine starke Vernetzung von thermoplastischen Materialien beeinträchtigt allerdings die Verarbeitbarkeit zu Formkörpern. Eine Vernetzung kann dies sogar unmöglich machen. Daher wird eine Vernetzung insbesondere erst nach dem Formgebungsprozess am festen Thermoplast-Formkörper durchgeführt, was jedoch im Vergleich zu den duroplastischen Formkörpern eher selten geschieht. Es sind insbesondere zwei Varianten bekannt, die eine Vernetzung von thermoplastischen Formkörpern beinhalten. Zum Einen kann ein Beschuss mit energiereicher Strahlung durchgeführt werden, um die thermoplastischen Formkörper nach dem Formgebungsprozess unterhalb ihrer Schmelztemperatur zu vernetzen. Der Beschuss mit energiereicher Strahlung führt jedoch zu einer unspezifischen Vernetzung, die mit einem Kettenabbau einhergeht, wobei bei vielen Thermoplasten die Vernetzung überwiegt. Daneben sind thermoplastische Schmelzkleber mit reaktiven Gruppen wie Isocyanaten bekannt, die bei Anwesenheit von Luftfeuchtigkeit diese zur Reaktion miteinander und damit zur Vernetzung bringen. Diese Schmelzkleber müssen unter Ausschluss von Luftfeuchtigkeit gelagert und appliziert werden und vernetzen über Wochen beim Eindiffundieren von Feuchtigkeit in die Klebefuge.

Im Falle von teilkristallinen Thermoplasten führt ein Tempern zu einem höheren Kristallinitätsgrad und zu größeren Kristalliten. Dies hat eine mäßige Erhöhung der Wärmeform- und Medienbeständigkeit und eine Verringerung der Quellung bei nur geringfügig erhöhter Glasübergangstemperatur führen zur Folge.

Daneben beschreibt die US 3,646,155 eine Vernetzung von Polyolefinen nach einer ersten Formgebung. Hier werden die Polyolefine zunächst in einem aufwändigen Verfahren durch Pfropfen mit ungesättigten Organosilanen modifiziert, die anschließend zur Vernetzung mit Wasserdampf behandelt werden. Die mit Silanen modifizierten Polyolefine können vor ihrer weiteren Vernetzung gelagert werden, allerdings unter Ausschluss von Luftfeuchtigkeit, was in der Praxis eine erhebliche Einschränkung darstellt. Bei technischen Formteilen aus gepfropften Polyolefinen würde eine Behandlung mit Heißdampf zum Verzug führen. Eine Vernetzung in feuchter Atmosphäre bei niedrigen Temperaturen zur Vermeidung eines Verzugs würde entsprechend langsam ablaufen. Weiterhin stellen gepfropfte Polyolefine aus den genannten Gründen keine Standardthermoplaste sondern Spezialpolymere dar.

Im Allgemeinen besteht der Nachteil, dass bei der Vernetzung von Thermoplasten durch chemische Reaktion die Thermoplastmoleküle reaktive Gruppen enthalten müssen und diese nicht während, sondern erst nach der Formgebung unter speziellen Bedingungen entweder miteinander oder über einen vor der Formgebung zugesetzten Härter reagieren dürfen. Bei der Vernetzung von Monomeren oder von Präpolymeren zu duroplastischen Formkörpern müssen diese reaktive Gruppen aufweisen mit einer Funktionalität > 2 und/oder es muss vor der Formgebung ein Härter zugesetzt werden. Aus wirtschaftlichen Gründen wird das Ausgangsmaterial im Werkzeug nur so weit vernetzt, dass der duroplastische Formkörper entformt werden kann. Anschließend wird der unvollständig vernetzte Formkörper in einem Temperprozess weitervernetzt, um die gewünschten Gebrauchseigenschaften zu erzielen. Findet die Vernetzung über einen separat zugesetzten Härter statt, so muss dieser nach der Formgebung noch in ausreichender Menge im Bauteil vorhanden sein und darf sich beim Tempern nicht oder nur langsam aus dem Formkörper verflüchtigen.

Sind die reaktiven Gruppen und/oder Härtermoleküle bereits im Formkörper vorhanden, so geht die Nachvernetzung mit einer lokal und zeitlich unterschiedlichen Volumenschwindung einher. Diese kann zur Bildung von Poren oder Rissen im Gefüge führen.

### Offenbarung der Erfindung

Die vorliegende Erfindung betrifft ein Verfahren zur Herstellung eines polymeren Formkörpers umfassend die Schritte:
a) Bereitstellen eines polymeren und/oder polymerisierbaren Ausgangsmaterials,
b) Formen eines polymeren Formkörpers aus dem Material des Schritts a) in einem Formgebungsprozess, und
c) gleichzeitiges Tempern und Durchvernetzen des Formkörpers aus Schritt b) bei einer Temperatur unterhalb der Schmelztemperatur des Polymers und unter Zusatz eines Reaktivgases.

Insbesondere ist das Ausgangsmaterial kein mit einem ungesättigten Silan modifiziertes beziehungsweise gepfropftes Polyolefin.

Die Reaktionsfähigkeit des Reaktivgases erlaubt die Vernetzung von unmodifizierten handelsüblichen, das heißt nicht mit speziellen reaktiven Gruppen versehenen, Thermoplasten.

Unter dem Begriff Durchvernetzen wird hier und im Folgenden im Unterschied zu einer reinen Oberflächenbehandlung verstanden, dass eine Vernetzung oder eine weitere Vernetzung (Nachvernetzung) in die Tiefe des Materials, gegebenenfalls über die gesamte Wanddicke, des Formkörpers durchgeführt wird.

In einem Verfahren gemäß der vorliegenden Erfindung erfolgt der Temperprozess in einer reaktiven Gasatmosphäre. Die aus dem Ofenraum in das Kunststoffbauteil eindiffundierenden Gase können mit Duroplasten unter Erhöhung der Vernetzungsdichte und mit Thermoplasten zumindest in den amorphen Bereichen unter Vernetzung reagieren. Dadurch wird dem Formkörper in dem erfindungsgemäßen Verfahren beim Tempern aus dem Ofenraum Masse zugeführt, wodurch die Schwindung, die bei einem Tempern in nichtreaktiver Atmosphäre eintritt, kompensiert werden kann. Lunker, die im Falle von bei der Ofentemperatur flüchtigen oder im Falle von nach der Teilvernetzung agglomeriert vorliegenden Härtern beim Tempern in den Formkörpern entstehen, können so vermieden werden. Zum Beispiel liegt in auf herkömmlichem Weg hergestellten Formkörpern aus Phenol-Novolakmassen der bei der Härtung nicht verbrauchte Härter, wie beispielsweise Hexamethylentetramin, in Form von mikroskopischen Nestern vor. Beim Tempern wird der Härter verbraucht, wobei die Nester entsprechende Poren im Gefüge hinterlassen können. Dies kann mit der gleichzeitigen Durchvernetzung mit Reaktivgas während des Temperns erfindungsgemäß vermieden werden.

Außerdem kann mit dem erfindungsgemäßen Verfahren eine Bildung von Poren oder Rissen beziehungsweise Lunkern effektiv vermieden werden, da weder reaktiven Gruppen noch Härtermoleküle bereits im Formkörper vorhanden sein müssen. Eine lokal und/oder zeitlich unterschiedliche Volumenschwindung wie bei Verfahren des Standes der Technik kann zudem auf diese Weise verringert oder sogar unterbunden werden. Darüber hinaus sind die noch nicht voll vernetzten oder noch zu vernetzenden unfertigen Formkörper auch unter normalen Bedingungen transportierbar und lagerbar, so dass eine spezielle Lagerung unter Ausschluss von Luftfeuchtigkeit oder mit anderen Auflagen überflüssig wird.

Die Einstellung der gewünschten Gebrauchseigenschaften der fertigen Formkörper kann auf einfache und optimierte Weise in dem Verfahren gemäß der vorliegenden Erfindung erfolgen. Dazu kann die Zugabe eines Härters entweder nur in der Menge erfolgen, die bereits bei der Formgebung in Schritt b) verbraucht wird oder in einem Umfang, der ohne Beeinträchtigungen, wie zum Beispiel der Bildung von Lunkern, bei der anschließenden Durchvernetzung einhergeht. Im Extremfall kann auch vollständig auf die Zugabe eines Härters verzichtet werden. In diesem Zusammenhang liegt ein weiterer Vorteil des vorliegenden Verfahrens darin, dass sich über das Temperatur-Zeit-Programm und die Konzentration des reaktiven Gases in im Schritt c) die Vernetzung und damit die Nachhärtung mit einer Optimierung der gewünschten Gebrauchseigenschaft steuern lässt, beispielsweise mit dem Ziel möglichst geringer Eigenspannungen im Formkörper oder gezielter Druck-Vorspannungen in den oberflächennahen Bereichen.

Mit anderen Worten werden in dem erfindungsgemäßen Verfahren thermo- oder duroplastische Kunststoffbauteile nach der Formgebung bei geeigneter Temperatur einer geeigneten Gasatmosphäre ausgesetzt. Dabei können die Moleküle des Reaktivgases in die amorphen Bereiche der Thermoplaste beziehungsweise in die duroplastischen Formkörper eindiffundieren und in einer chemischen Reaktion lineare Thermoplastmoleküle beziehungsweise lineare Molekülsegmente von Duroplasten unter Bildung von intermolekularen Brücken vernetzen.

In einer bevorzugten Ausgestaltung des erfindungsgemäßen Verfahrens ist das polymere Ausgangsmaterial ein thermoplastisches Polymer oder ein Monomer und/oder Präpolymer zur Herstellung eines duroplastischen oder elastomeren Formkörpers.

Gemäß einer weiteren bevorzugten Ausgestaltung des erfindungsgemäßen Verfahrens kann das Reaktivgas ausgewählt sein aus der Gruppe Wasser, Ammoniak, Tetrafluorethylen, Formaldehyd, Ethylenoxid, Sauerstoff, Diazomethan, Keten und Carben, oder Mischungen daraus.

Für eine hinreichend rasche Diffusion der Gase in die Formkörper sind kleine Gasmoleküle wie Wasser, Ammoniak, Tetrafluorethylen, Formaldehyd, Ethylenoxid oder Sauerstoff von Vorteil. Auch sehr reaktive Gase wie Diazomethan, Keten oder Carben sind möglich. Diese müssen unmittelbar erzeugt werden, da sie nicht lagerfähig sind. So lässt sich Keten durch Pyrolyse von Aceton erzeugen und Carben durch Bestrahlung von Keten mit UV-Licht oder durch Pyrolyse von Betain gemäß der folgenden Formel:

(CH₃)₃N+CH2COO⁻ →(CH₃)₃N + CO₂ + CH₂

Es werden insbesondere divalente beziehungsweise Divalenzen ausbildende Reaktivgase in dem erfindungsgemäßen Verfahren eingesetzt. Bevorzugt werden damit keine Halogene wie Fluor, Chlor, Brom oder lod als Reaktivgase verwendet.

Bevorzugt können in einer weiteren Ausgestaltung des Verfahrens der vorliegenden Erfindung in Schritt c) gasförmige Vernetzungskatalysatoren zugesetzt werden.

Vorteilhafterweise kann bei der Verwendung von weniger reaktiven Gasen als Reaktivgas in dem erfindungsgemäßen Verfahren zur Beschleunigung der Nachvernetzung der Temperatmosphäre neben dem Reaktivgas auch ein oder mehrere gasförmige Katalysatoren zugesetzt werden. Dies können beispielsweise Ammoniak oder Amine bei basisch katalysierten Reaktionen oder Chlorwasserstoffgas bei sauer katalysierten Reaktionen sein.

Bevorzugt können als Ausgangsmaterial thermoplastisches Polyphenylenoxid Polyamid, Polyesester. Polyphenylensulfid, ein thermoplastisches Elastomer, als Duroplaste Epoxidharz, Melaminharz, Harnstoffharz, ungesättigte Polyester, Phenolharz oder Elastomere eingesetzt werden.

Gemäß einer weiteren bevorzugten Ausgestaltung des erfindungsgemäßen Verfahrens kann zum Durchvernetzen von thermoplastischem Polyphenylenoxid, Polyamid, Polyester, Polyphenylensulfid oder Phenolharz, Epoxidharz, ungesättigter Polyester, Melaminharz oder Harnstoffharz als Reaktivgas Formaldehyd in Schritt c) eingesetzt werden.

In einer bevorzugten Ausgestaltung des erfindungsgemäßen Verfahrens kann zum Durchvernetzen von thermoplastischem Polyphenylenoxid, Polyamid, Polyester, Polyphenylensulfid oder Phenolharz, Epoxidharz, Melaminharz, Harnstoffharz und/oder ungesättigter Polyester als Reaktivgas Ethylenoxid in Schritt c) eingesetzt werden.

Die Erfindung betrifft weiterhin einen polymeren Formkörper, der nach dem erfindungsgemäßen Verfahren hergestellt ist.

Darüber hinaus betrifft die vorliegende Erfindung die Verwendung eines polymeren Formkörpers hergestellt nach dem erfindungsgemäßen Verfahren als Bauteil mit Kraftstoffkontakt in der Automobiltechnik.

Insbesondere kann ein nach dem erfindungsgemäßen Verfahren hergestellter polymerer Formkörper als Laufrad einer Kraftstoffpumpe, als Kraftstoffpumpengehäuse oder als Kraftstoffschlauch verwendet werden.

So kann zum Beispiel die erfindungsgemäße Vernetzung der Weichphase von thermoplastischen Elastomeren nach der Formgebung zur Verringerung der Quellung, zur Erhöhung der Beständigkeit in Medien und zur Erhöhung des Druckverformungsrestes genutzt werden, was insbesondere für Dichtungsanwendungen eine wesentliche Rolle spielt.

.Außerdem kann im Falle von Laufrädern aus Polyphenylensulfid für eine Kraftstoffpumpe die thermische Dehnung und die Quellung verringert werden, wenn ein polymerer Formkörper, welcher nach dem erfindungsgemäßen Verfahren hergestellt ist, verwendet wird. Im Falle von Gehäusen oder Schläuchen aus erfindungsgemäßen Formkörpern kann die Kraftstoff-Permeation verringert werden.

## Patentansprüche

1. Verfahren zur Herstellung eines polymeren Formkörpers umfassend die Schritte:
a) Bereitstellen eines polymeren und/oder polymerisierbaren Ausgangsmaterials, welches kein Silan modifiziertes Polyolefin ist,
b) Formen eines polymeren Formkörpers aus dem Material des Schritts a) in einem Formgebungsprozess, und
c) gleichzeitiges Tempern und Durchvernetzen des Formkörpers aus Schritt b) bei einer Temperatur unterhalb der Schmelztemperatur des Polymers und unter Zusatz eines Reaktivgases.

2. Verfahren nach Anspruch 1 **dadurch gekennzeichnet, dass** polymere Ausgangsmaterial ein thermoplastisches Polymer oder ein Monomer und/oder Präpolymer zur Herstellung eines duroplastischen oder elastomeren Formkörpers ist.

3. Verfahen nach Anspruch 1 oder 2 **dadurch gekennzeichnet, dass** das Reaktivgas ausgewählt ist aus der Gruppe Wasser, Ammoniak, Tetrafluorethylen, Sauerstoff, Formaldehyd, Ethylenoxid, Diazomethan, Keten und Carben, oder Mischungen daraus.

4. Verfahren nach einem der vorhergehenden Ansprüche **dadurch gekennzeichnet, dass** in Schritt c) gasförmige Vernetzungskatalysatoren zugesetzt werden.

5. Verfahren nach einem der vorhergehenden Ansprüche **dadurch gekennzeichnet, dass** als Ausgangsmaterial thermoplastisches Polyphenylenoxid, Polyamid, Polyester, Polyphenylensulfid, ein thermoplastisches Elastomer, und als Duroplaste Epoxidharz, Melaminharz, Harnstoffharz, ungesättigte Polyester, Phenolharz oder Elastomere eingesetzt wird.

6. Verfahren nach Anspruch 5, **dadurch gekennzeichnet, dass** zum Durchvernetzen von thermoplastischem Polyphenylenoxid, Polyamid, Polyester, Polyphenylensulfid oder Phenolharz, Epoxidharz, ungesättigter Polyester, Melaminharz oder Harnstoffharz als Reaktivgas Formaldehyd in Schritt c) eingesetzt wird.

7. Verfahren nach Anspruch 5, **dadurch gekennzeichnet, dass** zum Durchvernetzen von thermoplastischem Polyphenylenoxid, Polyamid, Polyester, Polyphenylensulfid oder Phenolharz, Epoxidharz, Melaminharz, Harnstoffharz und/oder ungesättigter Polyester als Reaktivgas Ethylenoxid in Schritt c) eingesetzt wird.

8. Polymerer Formkörper, hergestellt nach einem Verfahren der Ansprüche 1 bis 7.

9. Verwendung eines polymeren Formkörpers hergestellt nach einem Verfahren der Ansprüche 1 bis 7 als Bauteil mit Kraftstoffkontakt in der Automobiltechnik.

10. Verwendung eines polymeren Formkörpers nach Anspruch 9 als Laufrad einer Kraftstoffpumpe, als Kraftstoffpumpengehäuse oder als Kraftstoffschlauch.
